# EUROPEAN PATENT APPLICATION

(11) **EP 3 702 930 A1**
(43) Date of publication of application: **02.09.2020**
(21) Application number: 18881726.6
(22) Date of filing: 27.11.2018
(51) Int. Cl.: G06F 16/00

(54) **INTELLIGENT QUESTION AND ANSWER METHOD AND DEVICE**

(30) Priority: 27.11.2017 CN 201711210853
(71) Applicant: ZTE Corporation, Shenzhen, Guangdong 518057 (CN)
(72) Inventor: ZHOU, Xiangsheng, Shenzhen Guangdong 518057 (CN); SHI, Dongsheng, Shenzhen Guangdong 518057 (CN); LI, Chunxia, Shenzhen Guangdong 518057 (CN)
(74) Representative: Baudler, Ron
(86) International application number: PCT/CN2018/117600
(87) International publication number: WO 2019/101210

(57) **Abstract**

Provided by the present application are an intelligent question and answer device and a computer readable storage medium. The method comprises: receiving a question raised by a user; acquiring an entity corresponding to the question; as well as a connection relationship; and according to the entity and the connection relationship, acquiring an answer which corresponds to the question from within a pre-configured knowledge graph, wherein the connection relationship comprises an intent and/or an attribute.

## Description

### TECHNICAL FIELD

The present disclosure relates to, but is not limited to, the field of artificial intelligence.

### BACKGROUND

With the rapid development of the Internet technology, various kinds of search engines emerge correspondingly and provide more convenience for users in information search.

Current question and answer systems mainly adopt a keyword matching answering mode, i.e., acquire answers via a search engine by character string matching. Since the real intention of the user cannot be accurately identified in many cases, the results retrieved by the search engine are not accurate, and the question raised by the user cannot be effectively responded.

### SUMMARY

In one aspect, the present disclosure provides an intelligent question and answer method, and the method may include: receiving a question raised by a user; acquiring an entity and a connection relationship corresponding to the question; and acquiring, according to the entity and the connection relationship, an answer corresponding to the question from a preset knowledge graph, wherein the connection relationship includes an intention and/or an attribute.

In another aspect, the present disclosure further provides an intelligent question and answer device, which may include a memory and a processor, wherein the memory has an intelligent question and answer instruction stored thereon, and the processor, by executing the intelligent question and answer instruction, implements the operations of: receiving a question raised by a user; acquiring an entity and a connection relationship corresponding to the question; and acquiring, according to the entity and the connection relationship, an answer corresponding to the question from a preset knowledge graph.

In another aspect, the present disclosure further provides a computer readable storage medium storing a computer executable instruction thereon which, when executed by a processor, causes the method described herein to be implemented.

### BRIEF DESCRIPTION OF THE DRAWINGS

FIG. 1 is a flowchart illustrating an intelligent question and answer method according to an embodiment of the present disclosure;
FIG. 2 is a block diagram illustrating an intelligent question and answer device according to an embodiment of the present disclosure;
FIG. 3 is a block diagram illustrating a knowledge graph library according to an embodiment of the present disclosure;
FIG. 4 is a flowchart illustrating an intelligent question and answer interaction method according to an embodiment of the present disclosure; and
FIG. 5 is a diagram illustrating an example of intelligent question and answer according to an embodiment of the present disclosure.

### DETAILED DESCRIPTION

The technical solutions of the present disclosure will be further described in detail in conjunction with the accompanying drawings and embodiments. It should be noted that the solutions in the following embodiments may be arbitrarily combined without conflict.

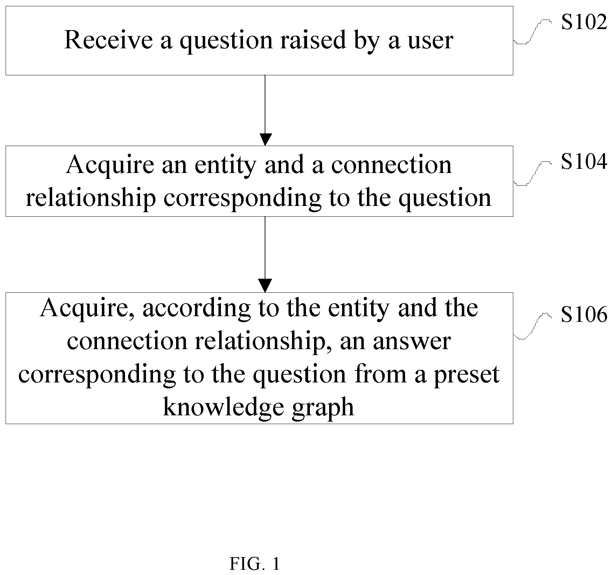

In one aspect, in an embodiment of the present disclosure, there is provided an intelligent question and answer method. FIG. 1 is a flowchart illustrating an intelligent question and answer method according to an embodiment of the present disclosure. As shown in FIG. 1, the method includes the following steps: S102: receiving a question raised by a user; S104: acquiring an entity and a connection relationship corresponding to the question; and S106: acquiring, according to the entity and the connection relationship, an answer corresponding to the question from a preset knowledge graph, wherein the connection relationship includes an intention and/or an attribute.

For example, when a user asks "who is Yao Ming's wife", "Yao Ming" is an entity, "wife" is an attribute, and a corresponding answer can be obtained by matching the two. As another example, when a user asks "where is there a cinema", "cinema" is an entity, "where is there" is an intention, and a cinema address can be obtained by matching the two. It should be noted that the concept of intention/attribute itself may be an entity, i.e., in this case the concept is an intention/attribute, but in other cases the concept may be an entity. For example, when a user asks "how to speak wife in English", "wife" becomes an entity, and "English" becomes an attribute.

According to an embodiment of the present disclosure, by identifying the entity information and the connection relationship such as the intention and/or the attribute in the user's question, and searching for the answer from a knowledge graph according to the entity information and the connection relationship, the answer can more accurately meet the real intention of the user.

In some embodiments, the step of acquiring the entity and the connection relationship corresponding to the question includes: sending, under the condition that no entity or connection relationship is included in the question, a request for acquiring the entity or the connection relationship to the user; and receiving and storing information about the entity or the connection relationship returned by the user.

Through the above method, when the question asked by the user contains only an entity or a connection relationship, the user is requested to describe in detail the entity or the connection relationship he/she wants to know so that the question contains information about both the entity and the connection relationship.

In some embodiments, the step of acquiring, according to the entity and the connection relationship, the answer corresponding to the question from the preset knowledge graph includes: sending, under the condition that no answer can be acquired according to the entity and the entity corresponds to a plurality of sub-entities, a sub-entity confirmation request to the user; and receiving a sub-entity confirmation response fed back by the user, and acquiring an answer corresponding to the question from the preset knowledge graph according to the sub-entity fed back by the user and the connection relationship.

Similarly, in some embodiments, under the condition that no answer can be acquired according to the connection relationship, a new connection relationship confirmation request may be sent to the user to match an answer according to a new connection relationship fed back by the user. According to the above method, the intelligent question and answer device can further understand the question of the user by repeatedly inquiring the user, and thus obtain the answer corresponding to the question.

In some embodiments, the step of acquiring, according to the entity and the connection relationship, the answer corresponding to the question from the preset knowledge graph further includes: querying, under the condition that no answer can be acquired according to the entity and the entity does not have a corresponding sub-entity, an index database to acquire the answer corresponding to the question.

The index database includes indexes established based on a search engine server, and is used for searching for a matched answer by querying the index database with the search engine when no answer is found by querying the knowledge graph. If still no matched answer is found in the index database, the question is replied with a default answer.

In some embodiments, the step of acquiring, according to the entity and the connection relationship, the answer corresponding to the question from the preset knowledge graph includes: extracting, under the condition that the question corresponds to a plurality of answers, a common attribute of the plurality of answers, sending an attribute information confirmation request to the user according to the common attribute, and determining a final answer from the plurality of answers according to the attribute information returned by the user.

For example, when a user asks "where is there a cinema in Beijing", address information of a plurality of cinemas in Beijing may be obtained according to "Beijing", "where is there", and "cinemas". Taking "cinema" as an entity and "Beijing" as an attribute, information about all cinemas in Beijing may be obtained, and then taking "where is there" as an intention, addresses of the cinemas in Beijing may be obtained. It is also possible to obtain the addresses of all the cinemas according to "where is there" and "cinema" first, and then obtain the addresses of cinemas in Beijing according to "Beijing".

After further extracting the attributes of the plurality of answers, it is found that these answers all have a common attribute "district". Then, the user may be asked to select a specific district. When the user selects "Chaoyang District", an address of a cinema corresponding to Chaoyang District is fed back to the user as a final answer.

Through the above method, the answer most conforming to the connection relationship of the user can be selected out under the condition that a plurality of answers are present.

In some embodiments, before acquiring the entity and the connection relationship corresponding to the question (e.g., before identifying the entity and the connection relationship in the question), the method further includes: normalizing the question.

In some embodiments, the step of normalizing the question includes: extracting a keyword from the question; matching the keyword according to a preset normalization library; and acquiring, under the condition of successful matching, a standard question corresponding to the keyword, wherein the keyword and the standard question are stored in the normalization library.

The normalization library mainly includes two domains, keywords and standard questions. The question of the user is matched by a keyword matching technology, and a standard question is extracted if the question of the user is matched successfully. Therefore, the intelligent question and answer device can understand the question more conveniently.

In some embodiments, before receiving the question raised by the user, the method further includes: storing the knowledge graph, the knowledge graph being a data structure consisting of a plurality of nodes and connecting lines; wherein each of the nodes is used for identifying entity information, and each of the connecting lines is used for identifying a connection relationship of different nodes.

The knowledge graph library consists of entities and connection relationships. The entities constitute nodes of the knowledge graph; and the connection relationships constitute edges of the knowledge graph. The knowledge graph carries a large amount of entity information and connection relationship information, and the question and answer system may acquire answers corresponding to questions by matching the entities and the connection relationships.

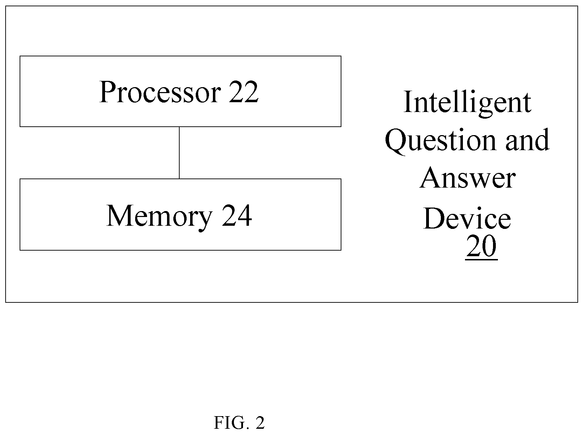

In another aspect, in an embodiment of the present disclosure, there is provided an intelligent question and answer device. FIG. 2 is a block diagram illustrating an intelligent question and answer device according to an embodiment of the present disclosure. As shown in FIG. 2, the intelligent question and answer device 20 includes a memory 24 and a processor 22 coupled to the memory, wherein the memory has an intelligent question and answer instruction stored thereon, and the processor, by executing the intelligent question and answer instruction, implements the operations of: receiving a question raised by a user; acquiring an entity and a connection relationship corresponding to the question; and acquiring, according to the entity and the connection relationship, an answer corresponding to the question from a preset knowledge graph, wherein the connection relationship includes an intention and/or an attribute.

In some embodiments, the processor 22, by executing the intelligent question and answer instruction, further implements the operations of: sending, under the condition that no entity or connection relationship is included in the question, a request for acquiring the entity or the connection relationship to the user; and receiving and storing information about the entity or the connection relationship returned by the user.

In some embodiments, the processor 22, by executing the intelligent question and answer instruction, further implements the operations of: sending, under the condition that no answer can be acquired according to the entity and the entity corresponds to a plurality of sub-entities, a sub-entity confirmation request to the user; and receiving a sub-entity confirmation response fed back by the user, and acquiring an answer corresponding to the question from the preset knowledge graph according to the sub-entity fed back by the user and the connection relationship.

In some embodiments, the processor 22, by executing the intelligent question and answer instruction, further implements the operation of: querying, under the condition that no answer can be acquired according to the entity and the entity does not have a corresponding sub-entity, an index database to acquire the answer corresponding to the question.

In some embodiments, the processor 22, by executing the intelligent question and answer instruction, further implements the operations of: extracting, under the condition that the question corresponds to a plurality of answers, a common attribute of the plurality of answers, sending an attribute information confirmation request to the user according to the common attribute, and determining a final answer from the plurality of answers according to the attribute information returned by the user.

In some embodiments, the processor 22, by executing the intelligent question and answer instruction, further implements the operation of: normalizing the question.

In some embodiments, the processor 22 is configured to, by executing the intelligent question and answer instruction, further implement the operations of: extracting a keyword from the question; matching the keyword according to a preset normalization library; and acquiring, under the condition of successful matching, a standard question corresponding to the keyword, wherein the keyword and the standard question are stored in the normalization library.

In some embodiments, the memory 24 further has the knowledge graph stored therein. The knowledge graph library consists of entities and connection relationships. The entities constitute nodes of the knowledge graph; and the connection relationships constitute edges of the knowledge graph.

In still another aspect, in an embodiment of the present disclosure, there is provided a method for realizing intelligent interaction between human and machine based on a preset knowledge graph.

To implement this solution, according to an embodiment of the present disclosure, a knowledge graph needs to be preset in the intelligent question and answer device.

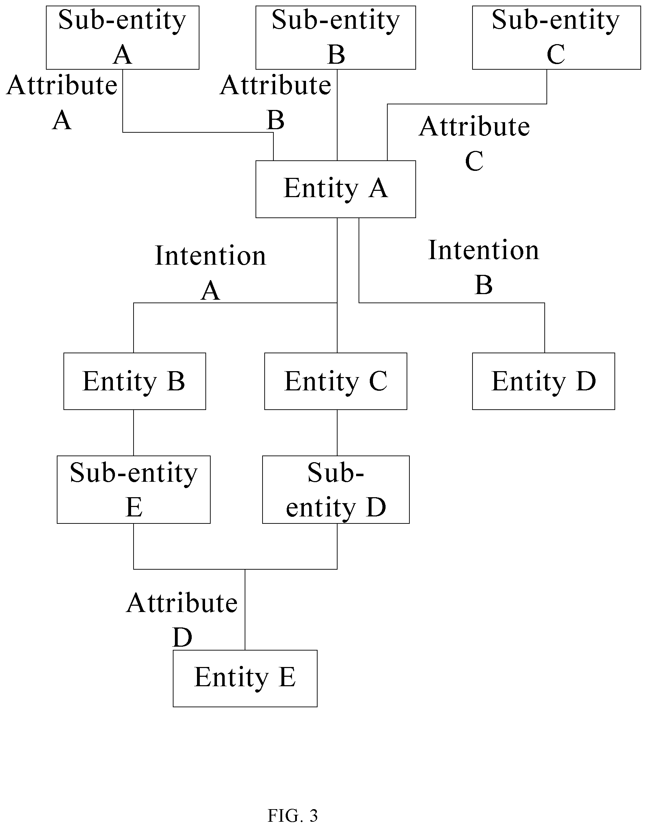

FIG. 3 is a block diagram illustrating a knowledge graph according to an embodiment of the present disclosure. As shown in FIG. 3, the knowledge graph consists of entities (e.g., entities A to E), intentions (e.g., intention A, intention B)/attributes (connection relationships) (e.g., attributes A to D). The entities constitute nodes of the knowledge graph; and the intentions/attributes constitute edges of the knowledge graph.

As shown in FIG. 3, one entity may correspond to one or more sub-entities (e.g., one or more of the sub-entities A to E), and the relationship between them is mainly an attribute relationship. For example, bank card corresponds to credit card and debit card; and country corresponds to China, United States and the like. The same entity may be combined with different intentions/attributes to obtain different entities, and of course, the same entity may be combined with the same intention/attribute to obtain a plurality of answers.

In the case that a plurality of answers are obtained after querying with the same entity combined with the same intention/attribute, if the plurality of answers have a common attribute, e.g., in the above question "where is there a cinema in Beijing", the plurality of answers have the common attribute "district", the answers may be further constrained according to the common attribute.

The index database includes indexes established based on a search engine server, and is used for searching for a matched answer by querying the index database with the search engine when no answer is found by querying the knowledge graph. If still no matched answer is found in the index database, the question is replied with a default answer.

The question normalization library mainly includes two domains, keyword string and standard question. The question of the user is matched by the keyword string using a pattern matching technology, and a standard question is extracted if the question of the user is matched successfully.

A predefined strategy is a strategy or principle to be adopted for interaction with the user according to the question of the user and the matching result. The predefined strategy includes, for example but is not limited to: strategy 1, when the question asked by the user contains only an entity or a connection relationship, asking the user to describe in detail the entity or connection relationship he/she wants to learn about; strategy 2, when no answer can be obtained according to the entity and the entity corresponds to a plurality of sub-entities, asking the user to select a specific sub-entity; and strategy 3, when a plurality of matched answers are obtained from the knowledge graph , extracting constraint common attributes and asking the user to select a specific constraint attribute.

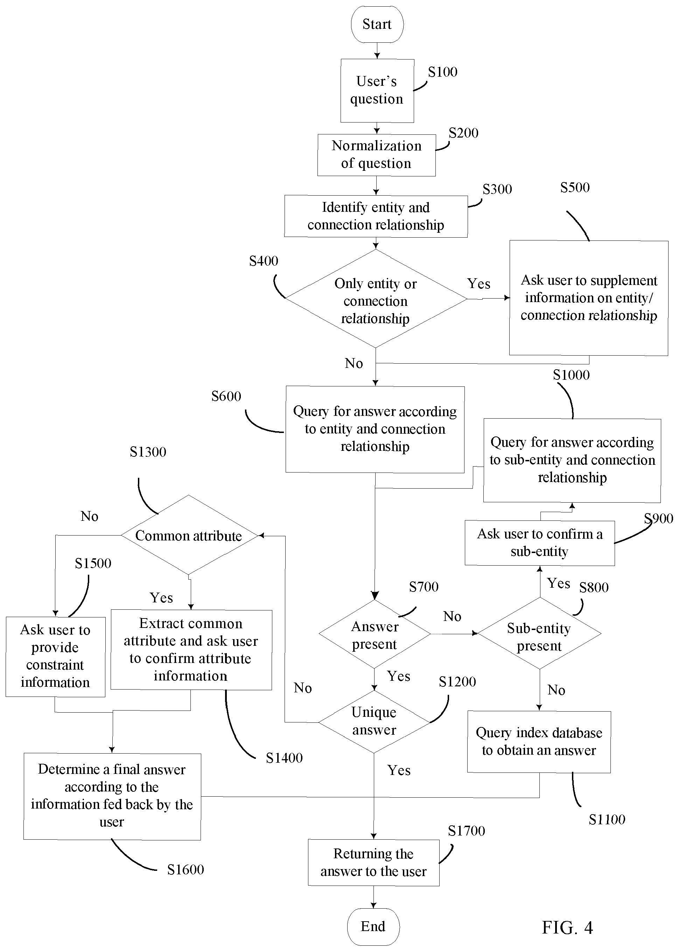

FIG. 4 is a flowchart illustrating an intelligent question and answer interaction method according to an embodiment of the present disclosure. As shown in FIG. 4, in an embodiment of the present disclosure, the intelligent question and answer interaction method includes:
first receiving a question from a user (S100);
4.1 querying a normalization library to carry out standardization processing on the question (S200), and identifying an entity and a connection relationship according to the normalized question (S300);
4.2 judging whether only an entity or a connection relationship is present (S400), if so (S400: Yes), setting an intelligent interaction mark as an entity/connection relationship supplement mark, asking the user according to strategy 1, and acquiring the entity/connection relationship fed back by the user (S500);
4.3 if both the entity and the contact relationship are present (S400: No), querying for a corresponding answer in the knowledge graph library according to the entity and the connection relationship (S600); and
4.4 feeding the queried result back to the user, which specifically includes the following three situations:
   4.4.1 judging whether an answer is present (S700), if not (S700: No), further judging whether the entity has a sub-entity (S800); if a sub-entity is present (S800: Yes), asking the user to select a specific sub-entity according to strategy 2 (S900), querying the knowledge graph library according to the sub-entity and the connection relationship fed back by the user to acquire an answer (S1000), and returning, under the condition that an answer is obtained, the answer to the user; and
      if no sub-entity is present (S800: No), directly querying the index database to give an answer (S1100);
   4.4.2 if the query obtains (S700: Yes) a plurality of answers (S1200: No), judging whether the plurality of answers have a common attribute (S1300);
      if a common attribute can be extracted (S1300: Yes), asking the user to "select" a specific attribute according to strategy 3 (S1400); if no common attribute can be extracted (S1300: No), asking the user to "input" constraint information (S1500), such as a further intention or attribute; and
      determining a unique answer according to the specific attribute or constraint information (S1600) and returning the answer to the user (S1700); and
   4.4.3 if the query obtains an answer (S700: Yes) and the answer is the only answer (S1200: Yes), directly returning the answer to the user (S1700).

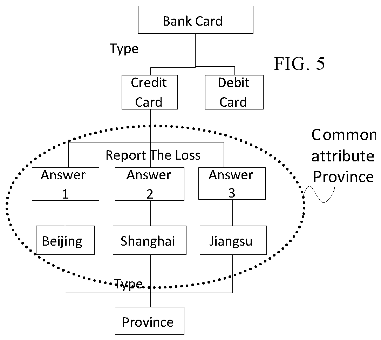

A specific example is described below to show the process of intelligent interaction according to the embodiment of the present disclosure. FIG. 5 is a diagram illustrating an example of intelligent question and answer according to an embodiment of the present disclosure. Referring to FIG. 5, the flow of intelligent question and answer may include: step 1: a user asking "can I report the loss of a bank card"; step 2: extracting an entity "bank card" and an intention "report the loss"; step 3: matching in the knowledge graph according to "bank card" and "report the loss", and obtaining zero matched result; step 4: querying a knowledge graph to determine that 'bank card' corresponds to two sub-entities "debit card" and "credit card"; step 5: asking the user whether to report the loss of a "debit card" or a "credit card"; step 6: the user inputting "credit card"; step 7: finding matched answers according to "credit card" and "report the loss"; step 8: matching to a plurality of answers, Answer1, Answer2, Answer3 ...; step 9: extracting a common attribute "province" of the plurality of answers, and asking the user which province he/she wants to report the loss; step 10: the user answering Beijing; and step 11: returning the answer corresponding to Beijing: Answer1.

In still another aspect, in an embodiment of the present disclosure, there is further provided a computer readable storage medium storing a computer executable instruction thereon which, when executed by a processor, causes the method described herein to be implemented.

The method for realizing intelligent interaction between human and machine improves the accuracy and interactivity of the intelligent question and answer system based on the retrieval technology so that the answer obtained by the present method is more accurate, the interaction is smoother and the user is more satisfied.

One of ordinary skill in the art will appreciate that all or part of the steps described above may be implemented by a program stored in a computer readable storage medium for instructing the associated hardware (e.g., a processor), such as a read-only memory, a magnetic or optical disk, and the like. Optionally, all or part of the steps of the above embodiments may be implemented using one or more integrated circuits. Accordingly, each module/unit in the above embodiments may be implemented in the form of hardware, for example, realizing corresponding functions by an integrated circuit, or may be implemented in the form of a software functional module, for example, realizing corresponding functions by executing programs/instructions stored in a memory by a processor. Embodiments of the disclosure are not limited to any particular combination form of hardware and software.

The above are only exemplarily embodiments of the present disclosure, and the flowchart is for the description of the present disclosure, which are not intended to restrict the present disclosure. For those skilled in the art, the present disclosure may have various changes and variations. Any amendments, equivalent substitutions, improvements, etc. within the principle of the disclosure are all included in the scope of the protection defined by the appended claims of the disclosure.

## Claims

1. An intelligent question and answer method, comprising:
receiving a question raised by a user;
acquiring an entity and a connection relationship corresponding to the question; and
acquiring, according to the entity and the connection relationship, an answer corresponding to the question from a preset knowledge graph, wherein the connection relationship comprises an intention and/or an attribute.

2. The method according to claim 1, wherein the acquiring the entity and the connection relationship corresponding to the question comprises:
sending, under a condition that no entity or connection relationship is included in the question, a request for acquiring the entity or the connection relationship to the user; and
receiving and storing information about the entity or the connection relationship returned by the user.

3. The method according to claim 1, wherein, the acquiring, according to the entity and the connection relationship, the answer corresponding to the question from the preset knowledge graph comprises:
sending, under a condition that no answer is able to be acquired according to the entity and the entity corresponds to a plurality of sub-entities, a sub-entity confirmation request to the user; and
receiving a sub-entity confirmation response fed back by the user, and acquiring an answer corresponding to the question from the preset knowledge graph according to the sub-entity fed back by the user and the connection relationship.

4. The method according to claim 3, wherein the acquiring, according to the entity and the connection relationship, the answer corresponding to the question from the preset knowledge graph further comprises:
querying, under a condition that no answer is able to be acquired according to the entity and the entity does not have a corresponding sub-entity, an index database to acquire the answer corresponding to the question.

5. The method according to claim 1, wherein the acquiring, according to the entity and the connection relationship, the answer corresponding to the question from the preset knowledge graph comprises:
extracting, under a condition that the question corresponds to a plurality of answers, a common attribute of the plurality of answers;
sending an attribute information confirmation request to the user according to the common attribute; and
determining a final answer from the plurality of answers according to attribute information returned by the user.

6. The method according to claim 1, wherein before acquiring the entity and the connection relationship corresponding to the question, the method further comprises:
normalizing the question.

7. The method according to claim 6, wherein the normalizing the question comprises:
extracting a keyword from the question;
matching the keyword according to a preset normalization library; and
acquiring, under a condition of successful matching, a standard question corresponding to the keyword, wherein the keyword and the standard question are stored in the normalization library.

8. The method according to any one of claims 1 to 7, wherein before receiving the question raised by the user, the method further comprises:
storing the knowledge graph, the knowledge graph being a data structure consisting of a plurality of nodes and connecting lines;
wherein each of the nodes is used for identifying entity information, and each of the connecting lines is used for identifying a connection relationship of different nodes.

9. An intelligent question and answer device, comprising a memory and a processor, wherein the memory has an intelligent question and answer instruction stored thereon, and the processor, by executing the intelligent question and answer instruction, implements operations of:
receiving a question raised by a user;
acquiring an entity and a connection relationship corresponding to the question; and
acquiring, according to the entity and the connection relationship, an answer corresponding to the question from a preset knowledge graph.

10. The intelligent question and answer device according to claim 9, wherein the processor, by executing the intelligent question and answer instruction, further implements operations of:
sending, under a condition that no entity or connection relationship is included in the question, a request for acquiring the entity or the connection relationship to the user; and
receiving and storing information about the entity or the connection relationship returned by the user.

11. The intelligent question and answer device according to claim 9, wherein the processor, by executing the intelligent question and answer instruction, further implements operations of:
sending, under a condition that no answer is able to be acquired according to the entity and the entity corresponds to a plurality of sub-entities, a sub-entity confirmation request to the user; and
receiving a sub-entity confirmation response fed back by the user, and acquiring an answer corresponding to the question from the preset knowledge graph according to the sub-entity fed back by the user and the connection relationship.

12. The intelligent question and answer device according to claim 11, wherein the processor, by executing the intelligent question and answer instruction, further implements an operation of:
querying, under a condition that no answer is able to be acquired according to the entity and the entity does not have a corresponding sub-entity, an index database to acquire the answer corresponding to the question.

13. The intelligent question and answer device according to claim 9, wherein the processor, by executing the intelligent question and answer instruction, further implements operations of:
extracting, under a condition that the question corresponds to a plurality of answers, a common attribute of the plurality of answers;
sending an attribute information confirmation request to the user according to the common attribute; and
determining a final answer from the plurality of answers according to attribute information returned by the user.

14. The intelligent question and answer device according to claim 9, wherein the processor, by executing the intelligent question and answer instruction, further implements an operation of:
normalizing the question.

15. The intelligent question and answer device according to claim 14, wherein the processor is configured to, by executing the intelligent question and answer instruction, further implement operations of:
extracting a keyword from the question;
matching the keyword according to a preset normalization library; and
acquiring, under a condition of successful matching, a standard question corresponding to the keyword, wherein the keyword and the standard question are stored in the normalization library.

16. The intelligent question and answer device according to any one of claims 9 to 15, wherein the processor is configured to, by executing the intelligent question and answer instruction, further implement an operation of:
storing the knowledge graph before receiving the question raised by the user, the knowledge graph being a data structure consisting of a plurality of nodes and connecting lines;
wherein each of the nodes is used for identifying entity information, and each of the connecting lines is used for identifying a connection relationship of different nodes.

17. A computer readable storage medium storing a computer executable instruction thereon which, when executed by a processor, causes the method according to any one of claim 1 to 8 to be implemented.
